(19) **Europäisches Patentamt / European Patent Office / Office européen des brevets**

(11) **EP 3 772 372 A1**

(12) **EUROPEAN PATENT APPLICATION**

(43) Date of publication:
**10.02.2021 Bulletin 2021/06**

(51) Int Cl.:
**B01J 8/02** $^{(2006.01)}$

(21) Application number: **19190074.5**

(22) Date of filing: **05.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
• **BASIN, Marie**
  **78350 Les Loges en Josas (FR)**
• **GARY, Daniel**
  **78350 Les Loges en Josas (FR)**
• **PROST, Laurent**
  **78350 Les Loges en Josas (FR)**
• **ULBER, Dieter**
  **60439 Frankfurt (DE)**

(74) Representative: **Air Liquide**
  **L'Air Liquide S.A.**
  **Direction de la Propriété Intellectuelle**
  **75, Quai d'Orsay**
  **75321 Paris Cedex 07 (FR)**

(54) **METHOD FOR PREVENTING FLUIDIZAZION IN AN UPWARD-FLOW CATALYTIC FIXED BED REACTOR**

(57) The present invention relates to a method to operate safely a catalytic fixed bed reactor operated in upward-flow configuration by preventing fluidization of the catalyst fixed bed present in said reactor; it relates also to a method to operate safely a furnace suitable for performing endothermic reactions containing a plurality of catalytic fixed bed reactors operated in upward-flow configuration by preventing fluidization of the catalyst fixed bed, and to a method to debottleneck safely a catalytic fixed bed reactor involving a gas flowing in upflow direction where the method includes increasing the reactant gas flow in the reactor while preventing the risk of fluidization of the catalyst bed present in the reactor by preventing fluidization of the catalyst fixed bed; the prevention of the fluidization of the catalyst fixed bed comprising a step of control of a pressure drop margin remaining before fluidization of the catalytic bed.

Fig. 4

EP 3 772 372 A1

## Description

The present invention relates to a method to operate safely a catalytic fixed bed reactor operated in upward-flow configuration and to a method to operate safely a furnace suitable for performing endothermic reactions containing a plurality of catalytic fixed bed reactors operated in upward-flow configuration.

Catalytic fixed bed reactors are commonly used for performing endothermic or exothermic reactions, for steam methane reforming (SMR), but also for other endothermic reactions like for example hydrocarbon feedstock cracking in externally fired reactors, and exothermic reactions like water gas shift reactions. Although the following description will most often refer to the SMR process, it applies as well to the other processes that utilize the same type of reactor which can be -or not- placed within a furnace and is operated in upward-flow configuration.

In the context of the present invention, the terms "reactor", "furnace", "steam methane reformer", "tube" and "upward-flow configuration" will be used and should be understood as hereafter defined:

- a "reactor" is a vessel used to perform a chemical reaction between several reactants; when used in the context of the invention, "reactor" will refer to a particular type of reactor which is a catalytic fixed bed reactor containing solid catalysts in the form of pellets are used to carry out the chemical reaction and the catalysts are arranged in a fixed bed configuration within the vessel;
- a "furnace" is an enclosed structure lined with refractory material and heated by means of burners which contains a plurality of reactors according to the previous definition;
- "steam methane reformer" refers to the apparatus used to carry out the steam methane reforming reaction within a furnace as per the description above;
- "tube" refers to a tubular reactor used in a steam methane reformer; it is a reactor per the above definition;
- "inner tube" is an exception to the precedent definition; it refers to a tube installed in a "bayonet tube" which is used for conveying the gas produced counter currently to the reactant gas;
- "upward-flow configuration" refers to an operation mode where the reactant gases are fed at the bottom of the catalytic bed and the products exit the reactor at the top of the catalytic bed.

The steam reforming process of light hydrocarbons, most often natural gas also referred to as SMR process, is based on the reforming reaction of methane, it yields to a mixture of hydrogen and carbon oxides, mainly monoxide, but also some dioxide in the presence of water vapor. This main reaction is endothermic and slow and requires additional heat input, as well as a catalyst to occur.

In industrial practice, the steam methane reformer usually comprises tubes placed in a furnace, said tubes being filled with catalyst - most often in the form of pellets that form the catalyst bed - and fed with the reactants mixture (usually methane and steam).

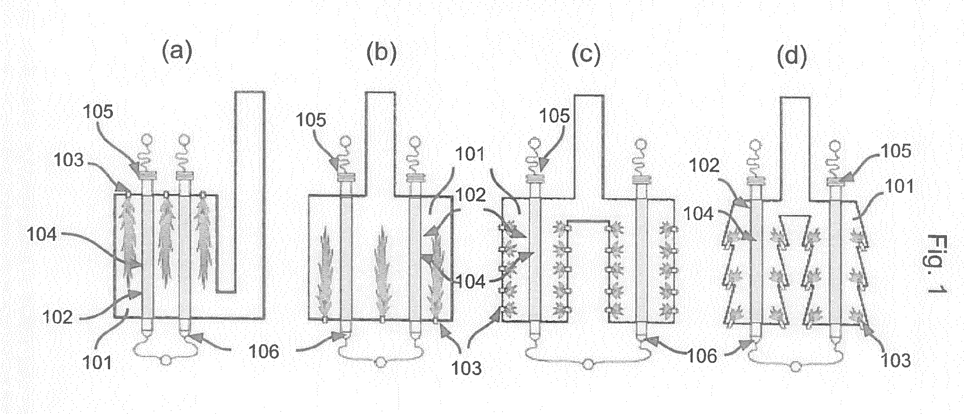

Figure 1 presents four well-proven configurations (a, b, c, d) that are currently used for furnace design with burners implemented in the furnace, either (a) on the ceiling (Top-Fired technology, also known as down-fired technology), or (b) on the floor (Up-Fired technology, also known as Bottom-Fired technology) or, on the walls (c) (Side-Fired), and (d) (Terrace-Wall technology). These furnaces are conventionally operated in downward-flow configuration, which means that the reactants are introduced at the top of the tubes and the gas produced is collected at the bottom of the tubes, such tubes will also be referred to as "conventional tubes" in the rest of the text.

In some cases however, for operating bayonet tubes for example, upward-flow operation can be more convenient.

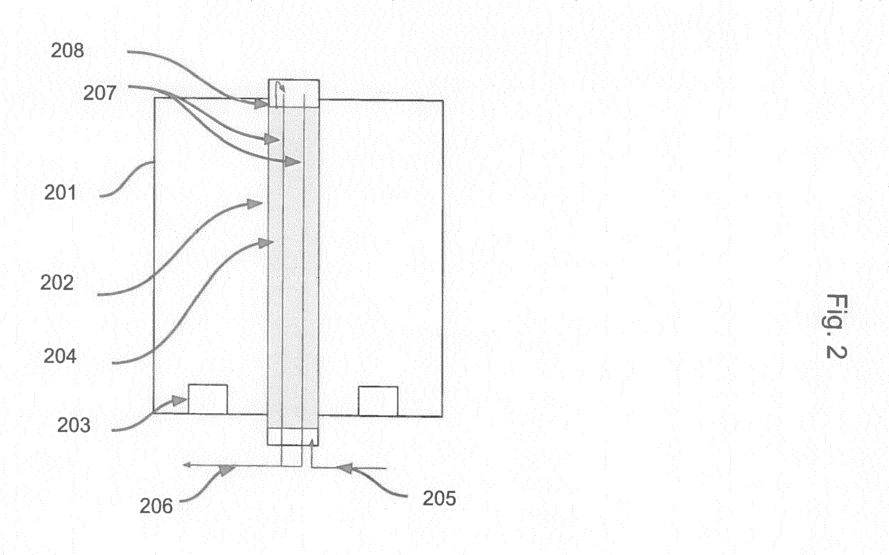

Figure 2 presents such a bayonet tube in upward-flow configuration. It is to be understood that in the case of bayonet tubes, the terms "upward-flow" and "downward-flow" refer to how the reactants are introduced in the catalytic bed: at the bottom for upward-flow, at the top for downward-flow. More precisely, the figure illustrates a bayonet tube in a bottom fired furnace, with the bayonet tube being placed between two burners. The gaseous mixture of reactants is introduced at the bottom of the tube and flows upward through the catalyst bed. One or more inner tubes (two on the figure) placed within the bayonet tube collect the gas produced at the top. The gas in the process of reforming and the gas reformed circulate counter-currently; the gas produced is finally collected at the bottom of the bayonet tube.

It is to be noted that bayonet tubes can be operated in a downward configuration; in that case, the reactant gas is fed at the top of the bayonet tube and the gas produced is collected as well at the top of the tube; however, the use of bayonet tubes is more convenient in upward configuration because the heavy equipments such as the product gas manifold are in that case installed on the ground and thereby the cost of the structure is significantly decreased.

This invention aims at improving the safety of catalytic fixed bed reactors being operated in upward-flow configuration.

The invention aims also at improving the safety of furnaces with at least a tube being placed within the furnace, being a conventional tube or a bayonet tube and with the burners location being any of the locations presented in Figure 1.

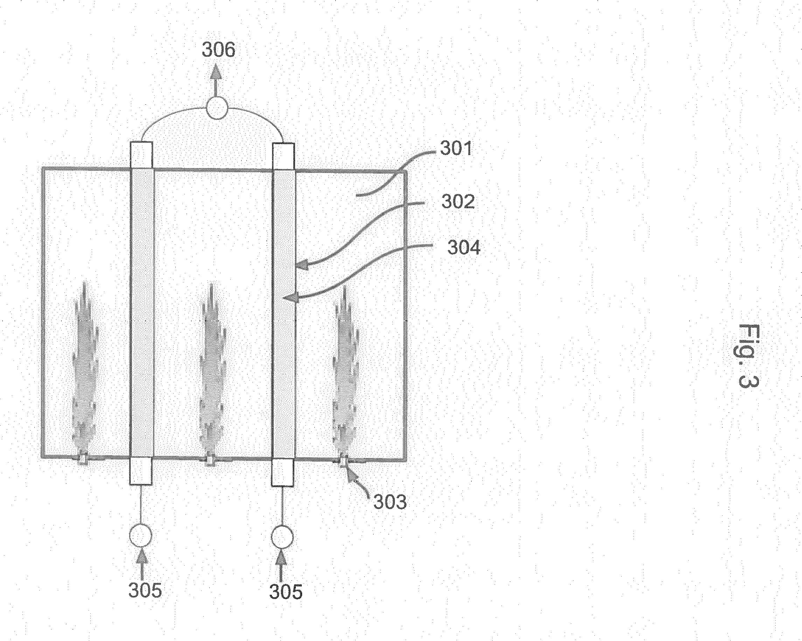

Figure 3 presents conventional tubes in upward-flow configuration. Both Figure 2 and Figure 3 show burners located at the furnace floor (bottom-fired configuration) but this does not restrict the scope of the present invention that applies as well to top-fired furnaces or any other furnace configuration.

Whatever the upward-flow technology, as the reactant stream flows from the bottom to the top of the reforming tube, the reactant gas flow rate has to be controlled in order to prevent fluidization of the catalyst bed. More precisely, the flow rate of the reactant gas has to be limited, in order to remain below the "minimum fluidization velocity".

The hydrodynamics of fluidization is known and well described in the literature, for example in the Perry's Chemical Engineers' Handbook, McGraw-Hill Editions, 1999.

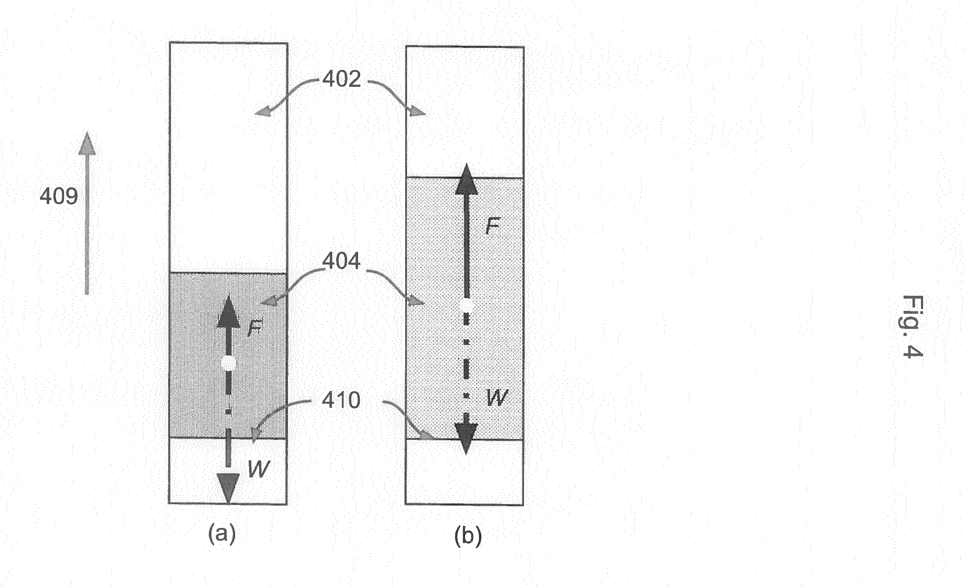

Figure 4 illustrates the behaviour of a catalyst fixed bed in case fluidization of the bed occurs, i.e. when the upward Drag Force **F** induced by the gas flowing up through the catalyst bed is higher than the Force of Gravity **W**; the case of a fixed bed with the intensity of the Drag Force **F** being lower than the intensity of the Force of Gravity **W** being presented on Figure 4a, while Figure 4b shows the fluidization of the bed resulting from the Drag Force being higher than the Force of Gravity of the catalyst bed, with therefore a risk of destruction by attrition or grinding.

The Upward Drag Force **F** is the product of the pressure drop generated by the catalyst bed multiplied by the area of the tube section crossed by the gas flowing through it, also referred to as "gas-cross-sectional area" according to:

$$\text{(Eq.1)} \qquad F = Dp_{bed} \times S$$

with:

| | | |
|---|---|---|
| F: | Upward drag force of the reactant gas, | in N |
| $Dp_{bed}$: | Pressure drop generated by the bed | in Pa |
| S: | Cross section area accessible to the gas | in $m^2$. |

Downward force of gravity **W** being the product of the catalytic bed mass $M_{Cat}$ by the constant of gravity **g**, it can be expressed according to:

$$\text{(Eq.2)} \qquad W = M_{Cat} \times g$$

with:

| | | |
|---|---|---|
| W: | Downward force of gravity | in N |
| $M_{Cat}$: | Mass of the catalyst | in kg |
| g: | Gravitational Constant | in $m^3.kg^{-1}.s^{-1}$ |

To operate an upward-flow reactor safely, it is essential to prevent the fluidization of the catalyst fixed bed installed; it is therefore essential to be able to continuously estimate the remaining margin with respect to the minimum fluidization velocity (also named fluidization limit).

Fluidized beds are well-known in the petrochemical industries for instance:

- in the case thermal cracking of heavy hydrocarbons (fluid coking) to make possible the conversion of heavy residues into light cuts that are more easily recoverable;
- catalytic cracking of hydrocarbons (FCC) is also a process based on a circulating fluidized bed aiming at converting mixtures of aromatic hydrocarbons, paraffinic and naphthenic having a high boiling point into vapours composed of gasoline, kerosene and fractions usable in diesel engine.

Several patents disclose monitoring methods for safe operation of fluidized beds such as:

- US 4,993,264 implementing a passive acoustic process to determine the height of a fluidized bed;
- US 4,858,144 using pressure measurements at different elevations of a fluidized bed to detect abnormalities such as agglomerates of particles that can disturb the conduct of a bed used for polymerization;
- US Patent No. 8,116,992 describing an apparatus and a method for determining the circulating flow rate of solids in a fluidized bed.

Catalytic reactors are either fixed bed reactors or fluidized bed reactors.

Usually, steam methane reformers use fixed bed reactors but the problem of fluidization of the catalyst fixed bed does not exist in the case of downward-flow reactors which represent the most common design because in that case, gas flow and gravity do not conflict.

For this reason, the risk of fluidization of the catalytic bed encountered with the use of catalytic fixed bed reactor in combination with upward-flow design has not been addressed in the past,and no apparatus nor method was found in the literature that teaches how to ensure that an upward-flow reactor remains operated safely by keeping the catalytic bed out of the fluidization regime.

However, as conventionally fixed beds reactors are fed from the top and are not submitted to fluidization risk, this problem has not been addressed in the past.

There is a therefore a need for a method for preventing the risk of fluidization of the catalytic fixed bed in upward flow configuration, thus enabling safe operation of said catalytic fixed bed.

There is also a need for a method to prevent the fluidization in reactors in upward-flow furnace for catalysed processes, and particularly for steam methane reforming.

The invention proposes to bring solution to this problem, thanks to a method that makes possible staying below the fluidization limit by controlling the flow rate of the reactants gas flowing into the tubes so as to remain below the minimum fluidization velocity and therefore to prevent fluidization of the catalyst in the fixed bed; it is proposed also a method to continuously estimate a margin with respect to this minimum so as to make this control feasible.

An object of the invention is a method to operate safely a catalytic fixed bed reactor operated in upward-flow configuration characterized in that it comprises the prevention of the fluidization of the catalyst fixed bed present in said reactor.

Some variants of the method according to the invention are presented hereafter, that may be considered alone or in combination:

- preventing the fluidization of the catalyst fixed bed can comprise a step of control of a pressure drop margin remaining before fluidization of the catalytic bed, the pressure drop at fluidization being :

$$DP_{critical} = M_{cat} \ x \ g \ /S$$

   with

   $M_{cat}$ being the mass of the catalyst in the catalytic bed,
   $g$ being the gravitational constant,
   $S$ being the gas-cross-sectional area through which the reactant gas flows in the catalytic bed;

- the pressure drop margin remaining before fluidization of the catalytic bed is estimated, the estimation of the pressure drop margin remaining before fluidization comprises the steps of:

   a) determination of the pressure drop at fluidization of the catalytic bed $DP_{critical}$ where

$$DP_{critical} = M_{cat} \ x \ g \ /S$$

   with

   $M_{cat}$ being the mass of the catalyst in the catalytic bed,
   $g$ being the gravitational constant,
   $S$ being the gas-cross-sectional area through which the reactant gas flows in the catalytic bed,

   b) measuring the pressure drop $DP_{bed}$ between the top and the bottom of the catalytic bed,
   c) calculating the pressure drop margin before fluidization;

   - $DP_{bed}$ can be measured by means of a Differential Pressure Transmitter (DPT);
   - $DP_{bed}$ can be measured by means of two Pressure Transmitter (PT), one installed at the catalytic bed inlet and the other installed at the outlet of the catalytic bed, and the pressure drop is calculated in the Distributed Control System (DCS) which operates the overall plant to which the reactor belongs;
   - the pressure drop margin may be expressed so as to give the consumed margin, preferably as $(DP_{bed} /DP_{critical})$ x100;

- the pressure drop margin may be expressed so as to indicate the remaining margin before fluidization, preferably as $(1-DP_{bed}/DP_{critical})$ x100;
- the pressure drop margin is expressed so as to give the consumed margin, preferably as $(DP_{bed}/DP_{critical})$ x100, this consumed margin is controlled by adjusting the reactants gas flow so as to remain below 90%, preferably below 80%;
- the pressure drop margin is expressed so as to give the remaining margin before fluidization, preferably as $(1-DP_{bed}/DP_{critical})$ x100, this remaining margin is controlled by adjusting the reactants gas flow so as to stay above 10%, preferably above 20%.

According to another object of the invention, it relates to a method to operate safely a furnace suitable for performing endothermic reactions, containing a plurality of catalytic fixed bed reactors operated in upward-flow configuration characterized in that it comprises the prevention of the fluidization of the catalyst fixed bed present in said reactors by applying any of the methods above to at least one of said reactors;

- the furnace may be a steam methane reformer furnace.

According to still another object of the invention, it relates to a method to debottleneck safely a catalytic fixed bed reactor involving a gas flowing in upflow direction where the method includes increasing the reactant gas flow in the reactor while preventing while at the meantime the risk preventing the risk of fluidization of the catalyst present in the reactor by controlling the pressure drop margin remaining before fluidization of the catalytic bed according to any of the methods above.

The invention and its advantages will be described in more details in the following examples and on the basis of the drawings, where:

Figure 1 shows the four main configurations of the industrial practise for the steam methane reforming;
Figure 2 shows a bayonet tube in a bottom fired furnace, in an upward-flow configuration, suitable for the implementation of the invention;
Figure 3 shows two conventional tubes in an upward-flow configuration, suitable for the implementation of the invention;
Figure 4 shows schematically the behaviour of a catalyst fixed bed submitted to the force of gravity and the drag force induced by gas flowing up through the catalyst bed
Figure 5 shows an example of application of the invention applied to a conventional tube similar to the tubes of Figure 3;
Figure 6 shows an example of application of the invention applied to a bayonet tube similar to the tubes of Figure 2.

Reading the following more detailed description of the figures will help understanding the invention. Note that in the figures, analogous items (either apparatus or process step) are identified by reference numerals identical except for the left digit which refers to the number of the figure.

Figure 1 shows schematically four conventional designs where a furnace **101** contains tubes **102** heated by burners **103**. Reactant gas **105** are introduced at the top of the tubes and flow down through the catalyst bed **104** installed in the tubes for the reforming of the reactant gas, and the product gas **106** leave the tube at the bottom end, opposite to the entrance.

In Figure 2, the tube **202** presented is a bayonet tube; installed in the furnace **201**, the tube is heated by burners **203** mounted at the floor of the furnace. A bayonet tube is composed of one external tube where the reforming takes place and one or more internal tubes installed in the catalyst bed for the transportation of the hot gas produced gas. The reactant gas **205** is introduced in the catalytic bed **204** (the catalytic bed appears in grey in this figure and in the other figures as well) at the bottom of the tube (upward-flow). Two inner tubes **207** are placed within the tubes **202** of the furnace **201**. The reactants **205** are introduced at the bottom of the catalytic bed **204**. The upper end of the tube **202** is a closed end; therefore, above the end of the catalytic bed, at a location identified as "reverse point" **208**, the product gas is forced to enter into the inner tubes **207** and to flow counter-currently to the reactant gas. The product gas **206** then exits the tube at the same end where the reactant gas **205** is introduced in the tube **202**. The upward-flow configuration coupled to the use of bayonet tubes as presented on the figure allows advantageously to install heavy equipments like the product gas manifold on the ground and thereby decreases in an important manner the cost of the furnace structure.

Figure 3 presents conventional tubes **302** in an upward-flow configuration; tubes are installed in the furnace **301** and are heated by burners **303** mounted at the bottom of the furnace. The reactant gas **305** is fed at the bottom of the tubes filled with catalyst **304** and the gas produced **306** is collected at the top of the tubes.

Figure 4, as already explained above, presents the forces **F** and **W** acting on the catalyst fixed bed **404** which can initiate the phenomenon of fluidization if the upward drag force **F** induced by the gas flowing up through the catalyst bed (the direction of the flow is represented by arrow **409**) is higher than the force of gravity **W**; Figure 4(a) illustrates the case of a fixed bed **404** with the intensity of the Drag Force **F** being lower than the intensity of the Force of Gravity **W**, Figure 4(b) shows the fluidization of the bed resulting from the intensity of the Drag Force **F** induced by the gas flow rate being higher than the intensity of the Force of Gravity **W** of the catalyst bed, with a risk of destruction by attrition or grinding. By construction, a support **410** is of course present at the bottom of the bed to maintain it in place.

Thanks to the present invention, simple method and apparatus are proposed to monitor and control the operation of an upward-flow reactor to remain below the fluidization limit. From the fluidization theory as exposed above, the pressure drop at fluidization $DP_{critical}$ (which is the pressure drop value corresponding to fluidization limit, i.e. when the Drag Force **F** is equal to the Force of Gravity **W**) is easily calculated from **Eq.1 = Eq.2**, leading to:

$$(Eq.3) \qquad DP_{critical} = M_{cat} \times g / S$$

with:

g is the gravitational constant;

S is the gas-cross-sectional area through which the reactant gas flows in the tube, its value is calculated from the tube dimensions;

$M_{cat}$ can be estimated from the data coming from the loading operations (the average mass $M_{Cat}$ of the catalyst filled in tubes during the loading operation is recorded). It appears thus from the above that this pressure drop at fluidization $DP_{critical}$ is independent of the operating conditions.

$DP_{bed}$ can be immediately obtained from simple measurements.

By making said measurements continuously -for example by installing a Differential Pressure Sensor/Transmitter (DPT) that will give an on-line and continuous access to the pressure drop of the catalytic bed $DP_{bed}$- and as the pressure drop at fluidization $DP_{critical}$ is known, the margin between the actual pressure drop $DP_{bed}$ and the critical one $DP_{Critical}$ is easily monitored.

The choice of the DPT and its installation have to be made carefully to ensure that:

- the sensor technology will not generate pressure drop and disturb the gas stream flow;
- there is no other equipment installed between the pressure taps located upstream and downstream that could generate a pressure drop.

Implementing a critical margin monitoring method in the Distributed Control System (DCS) of the plant is easy; the monitoring criterion will depend on $DP_{Bed}$ which is measured and $DP_{Critical}$ which is calculated according to **Eq.3.**

This criterion can be expressed by different ways, for instance:

- it can be expressed as $(DP_{bed}/DP_{critical}) \times 100$ according to **Eq.4**; In that case, it is representative of the percentage of the margin that is consumed: when this criterion is equal to 100%, it means that the margin is fully consumed; the critical load is reached, the load of the plant cannot be increased without inducing a risk of fluidization of the catalyst fixed bed;
- alternatively, by expressing the criterion as $(1 - [DP_{Bed}/DP_{Critical}]) \times 100)$ according to **Eq.5**, it is representative of the percentage of remaining margin before reaching the critical load of the plant;
- other expressions can of course be imagined for this criterion while remaining within the scope of the invention.

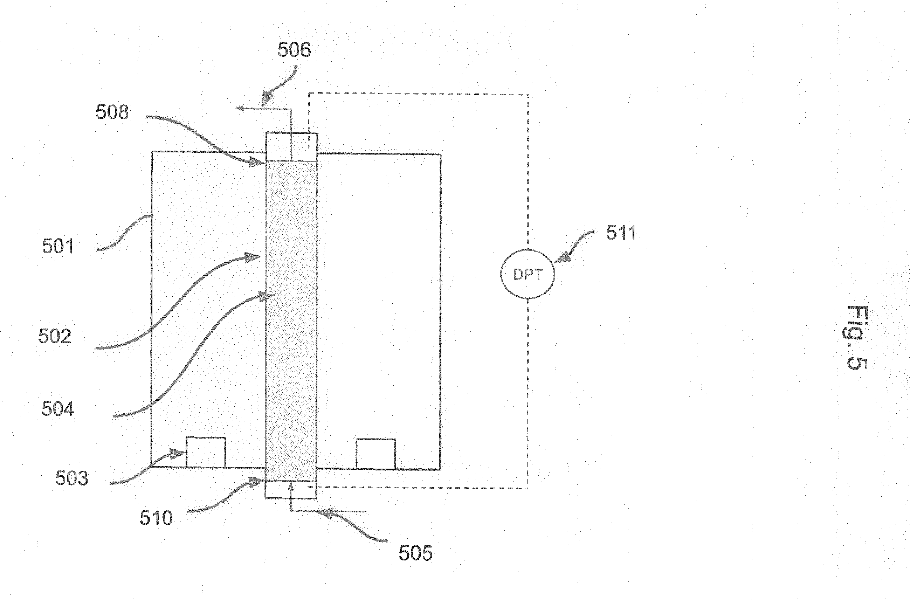

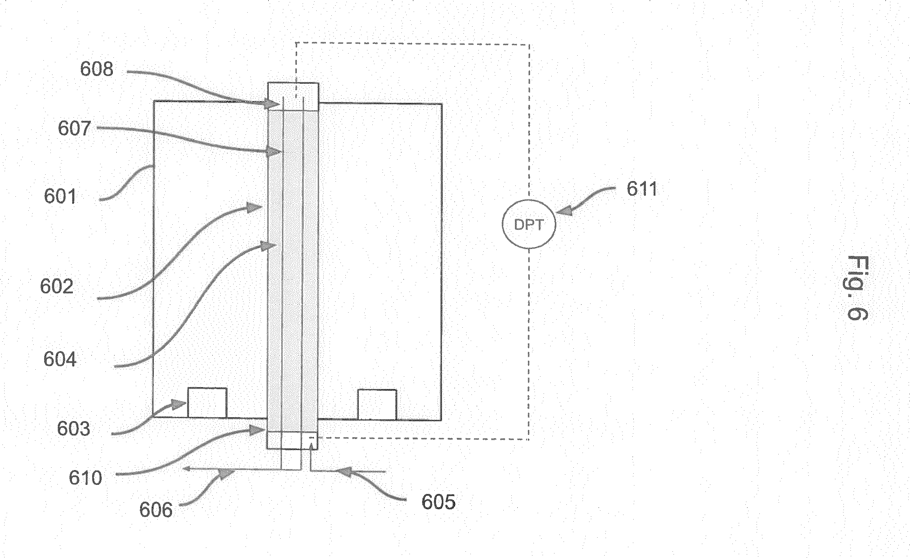

Two examples of application of the invention are presented hereafter in relation with Figure 5 and Figure 6. They illustrate the present invention, but must not be considered as limiting its scope of application.

Example 1 is based on the design of the tube of Figure 5, which is itself a conventional tube similar to the tube of Figure 4. The tube **502** is a conventional tube installed in a bottom-fired furnace **501**. The reactants **505** are introduced at the bottom the tube, at the inlet of the catalytic bed **504**, the product gas mixture **506** is collected at the outlet of the catalytic bed, at the top of the tube. The burners **503** are placed at the furnace floor. To implement the invention, a differential pressure sensor **511** equipped with a transmitter (referred as DPT) is installed to measure the pressure drop $DP_{bed}$ between the catalytic bed inlet **510** and the catalytic bed outlet **508**.

The tube **502** is filled with 100kg of catalyst, it has an inner diameter of 0.1m.

- pressure drop at fluidization is calculated by applying **Eq.3**: $DP_{Critical} = M_{Cat} \times g / S$ :

$$DP_{Critical} = 100 \times 9.81 / (3.14 \times (0.1 / 2)^2) = 1.25.10^5 \text{ Pa}.$$

(i.e. 1.25 bar).

- $DP_{bed}$ is given by the DPT.
- The criterion defining the margin remaining left between $DP_{bed}$ and $DP_{Critical}$ is calculated either by applying **Eq.4** or **Eq.5**; assuming that $DP_{bed}$ as measured by the DPT is 1 bar, then it means that according to **Eq.4**, 80% of the margin is consumed; expressed otherwise according to **Eq.5**, the margin remaining before fluidization is 20%.

Example 2 is based on the design of the tube of Figure 6 which presents a bayonet tube **602** installed in a bottom-fired furnace **601,** the reactants **605** are introduced at the inlet **610** of the catalytic bed **604** -at the bottom of the tube- and, at the outlet of the catalytic bed **608** -also known as reverse point-, the gas produced **606** enters the inner tubes **607** and is then collected at the bottom end of the tube **602.** The burners **603** are placed at the furnace floor. To implement the invention, a differential pressure sensor equipped with a transmitter (referred as DPT) **611** is installed to measure the pressure drop $DP_{bed}$ between the catalytic bed inlet and the reverse point **608.**

The tube **602** has an inner diameter of 0.125m, it contains two inner tubes **607** having an outer diameter of 0.025m. The tube **602** is filled with 95kg of catalyst.

- pressure drop at fluidization is calculated by applying **Eq.3**: $DP_{Critical} = M_{Cat} \times g\ /\ S$ ; in that case, it is necessary to take into account the 2 inner tubes and to remove their section for the calculation of $S$, which leads to $S= 3.14 \times (0.125\ /\ 2)^2 - 2 \times 3.14 \times (0.025\ /\ 2)^2$; the pressure drop at fluidization is therefore: $DP_{Critical} = M_{Cat} \times g\ /\ S = 95 \times 9.81\ /\ ((3.14 \times (0.125\ /\ 2)^2 - 2 \times 3.14 \times (0.025\ /\ 2)^2) = 8.25.10^4$ Pa. (i.e. 0.825 bar).
- $DP_{bed}$ is given by the DPT.
- The criterion defining the margin remaining left between $DP_{bed}$ and $DP_{Critical}$ is calculated either by applying **Eq.4** or **Eq.5**; assuming that $DP_{bed}$ as measured by the DPT is 0.6 bar, then it means that according to **Eq.4**, 73% of the margin is consumed; expressed otherwise according to **Eq.5**, the margin remaining before fluidization is 27%.

Thereby, based on the method set forth above, the operator can permanently know the actual fluidization margin of the plant. This information is of prime importance when a the plant is operated at a higher load than its nominal capacity to meet a customer's need for more hydrogen.

Steam reformers and other externally fired reactors can contain from ten to several hundred of tubes filled with catalyst. The filling procedures are well established and can lead to a small variation of the amount of catalyst in each tube. This variation is usually kept below +/-5% and recorded during the filling procedure. Thus, the operator knows which tube contains the lowest amount of catalyst and can use this lowest amount in the fluidization margin calculation. In operation, the feed gas flow will be distributed amongst the tubes so that the pressure drop is the same in all tubes; therefore equipping only one tube with pressure sensors may be enough in theory.

In practice, it might be advantageous to equip several tubes. Indeed, if only one tube is equipped and there is a sensor failure due to breakage, dust or water clogging, then the information is lost whereas if sensors are installed on several tubes, then the system is more reliable. In the case of a single reactor, it might be advantageous to install several sensors to prevent any information loss in case of breakage, dust or water clogging.

As this monitoring method is easy to implement, reliable and low cost, it will be possible to select and equip the tubes being filled with the lowest amount of catalyst for example, or to select and equip tubes in different rows and according to their position in a row (i.e. at the beginning, the middle or the end), or any other selection based on specific behaviour of certain tubes in the furnace.

The method can be implemented in a plant when a debottlenecking is scheduled in order to control the reactants gas flow so as to prevent the risk of fluidization.

**Claims**

1. Method to operate safely a catalytic fixed bed reactor operated in upward-flow configuration **characterized in that** it comprises the prevention of the fluidization of the catalyst fixed bed present in said reactor.

2. Method according to claim 1 **characterized in that** the prevention of the fluidization of the catalyst fixed bed comprises a step of control of a pressure drop margin remaining before fluidization of the catalytic bed, the pressure drop at fluidization being:

$$DP_{critical} = M_{cat} \times g\ /S$$

with

$M_{cat}$ being the mass of the catalyst in the catalytic bed,
$g$ being the gravitational constant,
$S$ being the gas-cross-sectional area through which the reactant gas flows in the catalytic bed.

3. Method according to claim 2 **characterized in that** the pressure drop margin remaining before fluidization of the catalytic bed is estimated, the estimation comprising at least the steps of:

   a) determination of the pressure drop at fluidization of the catalytic bed $DP_{critical}$ where

$$DP_{critical} = M_{cat} \; x \; g \; /S$$

   with

   $M_{cat}$ being the mass of the catalyst in the catalytic bed,
   $g$ being the gravitational constant,
   $S$ being the gas-cross-sectional area through which the reactant gas flows in the catalytic bed,

   b) measuring the pressure drop $DP_{bed}$ between the top and the bottom of the catalytic bed,
   c) calculating the pressure drop margin before fluidization.

4. Method according to claim 3 where $DP_{bed}$ is measured by means of a Differential Pressure Transmitter (DPT).

5. Method according to claim 3 where $DP_{bed}$ is measured by means of two Pressure Transmitter (PT), one installed at the catalytic bed inlet and the other installed at the outlet of the catalytic bed, and the pressure drop is calculated in the plant Distributed Control System (DCS)

6. Method according to any of the claims 2 to 5 where the pressure drop margin is expressed so as to give the consumed margin, preferably as $(DP_{bed} / DP_{critical})$ x100, this consumed margin is controlled by adjusting the reactants gas flow so as to remain below 90%, preferably below 80%.

7. Method according to any of the claims 2 to 5 where the pressure drop margin is expressed so as to give the remaining margin before fluidization, preferably as (1 - $DP_{bed} / DP_{critical}$) x100, this remaining margin is controlled by adjusting the reactants gas flow so as to stay above 10%, preferably above 20%.

8. Method to operate safely a furnace suitable for performing endothermic reactions, containing a plurality of catalytic fixed bed reactors operated in upward-flow configuration **characterized in that** it comprises the prevention of the fluidization of the catalyst fixed bed present in said reactors by applying the method of any of the claims 2 to 7 to at least one of said reactors.

9. Method according to claim 8 **characterized in that** the furnace is a steam methane reformer furnace.

10. Method to debottleneck safely a catalytic fixed bed reactor involving a gas flowing in upflow direction where the method includes increasing the reactant gas flow in the reactor while preventing the risk of fluidization of the catalyst bed present in the reactor by controlling the pressure drop margin remaining before fluidization of the catalytic bed according to the method of any of the claims 2 to 7.

Fig. 1

Fig. 2

Fig. 3

Fig. 4

# Fig. 5

Fig. 6

| | Europäisches Patentamt European Patent Office Office européen des brevets | **EUROPEAN SEARCH REPORT** | Application Number EP 19 19 0074 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 564 994 A (UNITED TECHNOLOGIES CORP) 16 April 1980 (1980-04-16) * claim 1 * ----- | 1-10 | INV. B01J8/02 |
| X | US 3 990 858 A (O'SULLIVAN THOMAS F ET AL) 9 November 1976 (1976-11-09) * abstract; claim 1 * * column 2, lines 3-12 * ----- | 1-10 | |
| X | US 3 838 977 A (WARREN J) 1 October 1974 (1974-10-01) * abstract * ----- | 1-10 | |
| X | EP 1 080 772 A1 (PRAXAIR TECHNOLOGY INC [US]) 7 March 2001 (2001-03-07) * Paragraphs [0003], [0021] * ----- | 1-10 | |
| X | WO 00/27518 A1 (INT FUEL CELLS LLC [US]) 18 May 2000 (2000-05-18) * claim 5 * * page 6, lines 4-10 * ----- | 1-10 | |
| X | US 4 997 465 A (STANFORD RAYMOND A [US]) 5 March 1991 (1991-03-05) * abstract; claim 1 * ----- | 1-10 | TECHNICAL FIELDS SEARCHED (IPC) B01J |
| X | US 6 605 135 B2 (AIR PROD & CHEM [US]) 12 August 2003 (2003-08-12) * abstract; claim 1 * ----- | 1-10 | |

The present search report has been drawn up for all claims

| Place of search | Date of completion of the search | Examiner |
|---|---|---|
| Munich | 25 November 2019 | Biscarat, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 0074

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2019

| Patent document cited in search report | | Publication date | Patent family member(s) | | Publication date |
|---|---|---|---|---|---|
| GB 1564994 | A | 16-04-1980 | CA | 1107039 A | 18-08-1981 |
| | | | DE | 2751309 A1 | 29-06-1978 |
| | | | FR | 2374949 A1 | 21-07-1978 |
| | | | GB | 1564994 A | 16-04-1980 |
| | | | IL | 53403 A | 31-03-1981 |
| | | | JP | S577536 B2 | 10-02-1982 |
| | | | JP | S5379766 A | 14-07-1978 |
| US 3990858 | A | 09-11-1976 | NONE | | |
| US 3838977 | A | 01-10-1974 | NONE | | |
| EP 1080772 | A1 | 07-03-2001 | BR | 0003890 A | 03-04-2001 |
| | | | CA | 2317304 A1 | 01-03-2001 |
| | | | CN | 1286131 A | 07-03-2001 |
| | | | EP | 1080772 A1 | 07-03-2001 |
| | | | JP | 3838854 B2 | 25-10-2006 |
| | | | JP | 2001079330 A | 27-03-2001 |
| | | | KR | 20010067128 A | 12-07-2001 |
| | | | US | 6334889 B1 | 01-01-2002 |
| WO 0027518 | A1 | 18-05-2000 | AU | 2148600 A | 29-05-2000 |
| | | | AU | 2843000 A | 05-06-2000 |
| | | | BR | 9915190 A | 14-08-2001 |
| | | | BR | 9915221 A | 24-07-2001 |
| | | | CN | 1325319 A | 05-12-2001 |
| | | | CN | 1330570 A | 09-01-2002 |
| | | | EP | 1140322 A1 | 10-10-2001 |
| | | | EP | 1148939 A1 | 31-10-2001 |
| | | | ID | 29948 A | 25-10-2001 |
| | | | JP | 2002529359 A | 10-09-2002 |
| | | | JP | 2002529895 A | 10-09-2002 |
| | | | US | 6258330 B1 | 10-07-2001 |
| | | | WO | 0027518 A1 | 18-05-2000 |
| | | | WO | 0029092 A1 | 25-05-2000 |
| US 4997465 | A | 05-03-1991 | NONE | | |
| US 6605135 | B2 | 12-08-2003 | AT | 289854 T | 15-03-2005 |
| | | | CA | 2400271 A1 | 26-03-2003 |
| | | | CN | 1410152 A | 16-04-2003 |
| | | | DE | 60203076 T2 | 11-08-2005 |
| | | | EP | 1297881 A1 | 02-04-2003 |
| | | | ES | 2238530 T3 | 01-09-2005 |
| | | | KR | 20030026871 A | 03-04-2003 |
| | | | TW | 541194 B | 11-07-2003 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 19 0074

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2019

| Patent document cited in search report | Publication date | Patent family member(s) | Publication date |
|---|---|---|---|
| | | US 2003056649 A1 | 27-03-2003 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4993264 A
- US 4858144 A

- US 8116992 B

**Non-patent literature cited in the description**

- Perry's Chemical Engineers' Handbook. Mc-Graw-Hill, 1999